# EUROPEAN PATENT APPLICATION

(11) **EP 3 446 614 A1**
(43) Date of publication of application: **27.02.2019**
(21) Application number: 17187093.4
(22) Date of filing: 21.08.2017
(51) Int. Cl.: A47L 15/00, A47L 15/42

(54) **DISHWASHING MACHINE**

(71) Applicant: Vestel Elektronik Sanayi ve Ticaret A.S., 45030 Manisa (TR)
(72) Inventor: GÜVENDIK, Celal, 45030 Manisa (TR)
(74) Representative: Roberts, David

(57) **Abstract**

A dishwashing machine (200) comprising:
a washing compartment (204) for holding one or more items to be washed;
a door (240) arranged to be movable between a closed position and an open position to enable access to the washing compartment (204);
a washing mechanism for washing the one or more items to be washed, the washing mechanism comprises at least one spray arm (224, 226) for spraying water within the washing compartment (204);
a controller (134, 234) which controls the dishwashing machine (200);
an electrical generator (255) which comprises a turbine (256), the turbine (256) is configured to be rotated by water incident thereon so as to generate electricity in the generator (255).

By this means electric energy can be conserved, i.e. saving of electric energy consumption.

## Description

### Technical Field

The present disclosure relates to a dishwashing machine.

### Background

Dishwashing machines (also referred to as dishwashers) are used for washing items such as crockery and cutlery. A known dishwashing machine comprises a washing compartment for holding one or more items to be washed, and a washing mechanism for washing those items. Typically a user can select from a plurality of pre-defined washing cycles via a user interface on a front face of the dishwashing machine.

### Summary

According to a first aspect disclosed herein, there is provided a dishwashing machine comprising: a washing compartment for holding one or more items to be washed; a door arranged to be movable between a closed position and an open position to enable access to the washing compartment; a washing mechanism for washing the one or more items to be washed, the washing mechanism comprising at least one spray arm for spraying water within the washing compartment; a controller for controlling the dishwashing machine, and an electrical generator comprising a turbine, the turbine configured to be rotated by water incident thereon so as to generate electricity in the generator.

According to an example, the dishwashing machine comprising one or more channels arranged to direct water on to the turbine.

According to an example, at least one of the one or more channels is angled so as to direct water towards the turbine.

According to an example, at least one of the one or more channels is comprised in an upper portion of the washing compartment.

According to an example, at least one of the one or more channels comprises a vertical channel arranged above the turbine.

According to an example, the turbine is located proximate to a base surface of the washing compartment.

According to an example, the washing compartment comprises a back surface positioned opposite a door aperture of the dishwashing machine, the turbine located on or adjacent the back surface.

According to an example, the dishwashing machine is arranged to direct water which has exited the turbine for recirculation within the dishwashing machine.

According to an example, the dishwashing machine is arranged to use electricity generated by the electrical generator to power one or more components of the dishwashing machine.

According to an example, the one or more components comprise one or more low voltage components.

According to an example, the dishwashing machine comprises a battery, the battery arranged to store at least some of the electricity generated by the generator.

According to an example, the battery is arranged to supply electricity for maintaining the dishwashing machine in a standby mode.

According to an example, the controller is arranged to monitor voltage of the battery, and if the battery voltage falls below a threshold level, to switch to mains power supply or to supplement the battery with mains power supply.

### Brief Description of the Drawings

To assist understanding of the present disclosure and to show how embodiments may be put into effect, reference is made by way of example to the accompanying drawings in which:
Figure 1 shows schematically a dishwashing machine according to an example;
Figure 2 shows schematically a dishwashing machine according to an example;
Figure 3 shows schematically a dishwashing machine according to an example;
Figure 4 shows schematically a dishwashing machine according to an example;
Figure 5 shows schematically a turbine according to an example;
Figure 6 is a flow chart of a method according to an example.

### Detailed Description

The present disclosure has applicability to dishwashing machines or dishwashers. Dishwashing machines are used to automate the washing of items associated with food preparation and/or cooking and/or eating. Such items include crockery such as plates, bowls, cups, mugs etc. Such items may also include cutlery such as knives, forks, spoons, or indeed any other cooking or eating utensil. Other items that may be washed include glassware, food containers etc.

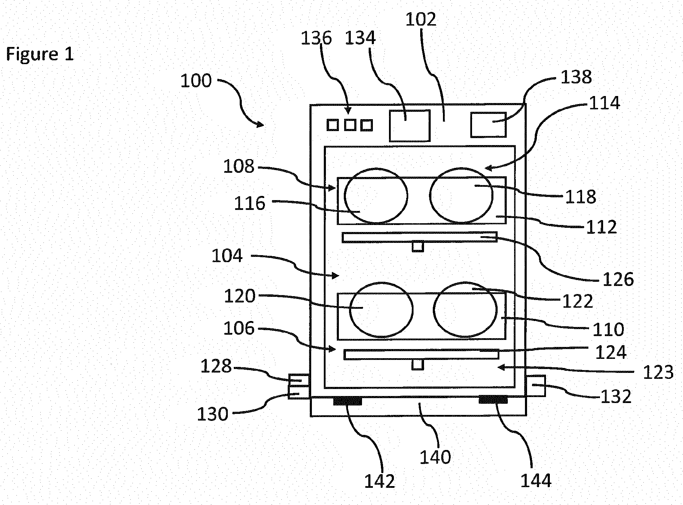

Figure 1 schematically shows an example of a dishwashing machine 100. The dishwashing machine 100 comprises a main body 102, within which there is a washing compartment or chamber 104. The washing compartment 104 comprises a lower portion 106 and an upper portion 108. The lower portion 106 comprises a tray or rack 110 for holding items to be washed, and the upper portion 108 comprises a tray or rack 112 for holding items to be washed. The racks 110 and 112 can be moved in and out of the washing compartment 104 on roller assemblies.

Items to be washed are schematically shown at 114. In this case the items to be washed are schematically represented by plates 116 and 118 on rack 112, and plates 120 and 122 on rack 120. Of course there may alternatively be any other type of item to be washed or combination of items to be washed. In the example of Figure 1 a washing mechanism 123 comprises spray arm 124 in lower portion 106, and spray arm 126 in upper portion 108. In other examples the upper spray arm 126 is omitted. Each spray arm comprises a series of holes or nozzles which can spray water upwardly towards the items to be washed 114, while the spray arms 124 and 126 rotate.

The dishwashing machine 100 further comprises water inlet 128 and water outlet 130 for enabling water to be fed to and taken away from the dishwashing machine respectively. In some examples a heater element (not shown) is provided for heating water as necessary. In other examples hot and cold water is drawn from a building's supply as required. A power connection is schematically shown at 132, which enables the dishwashing machine to be connected to mains electrical power for powering the dishwashing machine.

A controller is schematically shown at 134 for controlling operations of the dishwashing machine. The controller may comprise at least one memory and at least one processor. The controller 134 can, for example, cause the dishwashing machine to operate according to one or more pre-determined washing cycles selected via a user interface 136. The available washing cycles may differ from each other by temperature and/or duration, for example. Via the user interface 136 a user may also be able to select whether the washing cycle is for a full or half load. A display 138 is also provided which can display information to the user. This may include information such as confirming a user's washing cycle selection, as well as information such as time remaining of a washing cycle that is in progress.

A door of the dishwashing machine is schematically shown at 140. The door 140 is connected to main body 120 via hinges 142 and 144. In Figure 1 the door is in an open position enabling access to washing compartment 104. The door 140 may be moved to a closed position so that the washing compartment 104 is then substantially enclosed. The door 140 may also include a receptacle for holding dishwashing detergent (e.g. a dishwashing machine cube) which can be released in to the dishwashing machine during a wash. The receptacle for holding washing detergent may of course also be positioned elsewhere within the dishwashing machine. The dishwashing machine may also include one or more further receptacles for containing dishwashing machine salt and/or rinse aid, for example.

The present inventor has identified that known dishwashing machines could conserve or harness at least some of their expended energy.

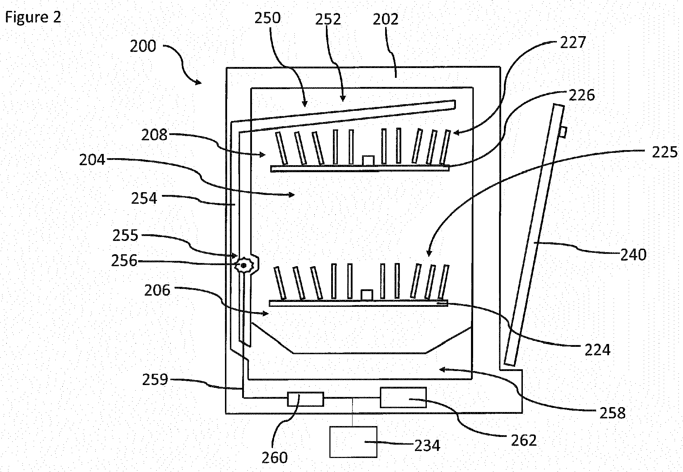

Figure 2 shows an example dishwashing machine 200, in cross-section. The dishwashing machine 200 comprises a main body portion 202, and a door 240. In a lower portion 206 of the dishwashing machine there is a spray arm 224, and in upper portion 208 there is a spray arm 226. Spray arm 224 is schematically shown as spraying water 225, and spray arm 226 is schematically shown as spraying water 227. The water 225 and 227 may also comprise dishwashing detergent. The mixture of water and dishwashing detergent may be referred to as washing liquor. The water is pumped from reservoir or tub 258, to the spray arms 224 and 224, using a circulation pump. In some examples only one spray arm is provided. Where only one spray arm is provided, typically it will be the lower spray arm 224.

As the water is sprayed, the water strikes items to be washed in the machine, so as to rinse or wash those items. Some of the sprayed water does not contact the items to be washed, and instead strikes the internal sides or roof of the washing compartment. Additionally or alternatively, some of the sprayed water deflects from items to be washed on to the side or roof surface. Typically, in known washing machines these droplets of water run back down the sides of the dishwashing machine to the reservoir 258 for recirculation. In the presently described examples, and as will be explained in more detail below, energy from these descending drips or droplets is harnessed so as to generate electricity.

As shown in Figure 2, the dishwashing machine comprises at least one channel 250 for directing or diverting these droplets towards an electricity generator 255. In this example the at least one channel 250 comprises an upper channel 252 and a further channel or downpipe 254 which descends from the upper portion 208 of the dishwashing machine towards the lower portion 206. The electricity generator 255 comprises a turbine or waterwheel 256. The electricity generator 255 is connected to a battery 260 and one or more components 262 via one or more cables or wires 259. In some examples the one or more components 262 are one or more low voltage components. The one or more components 262 are controlled by controller 234. The controller comprises at least one processor and at least one memory.

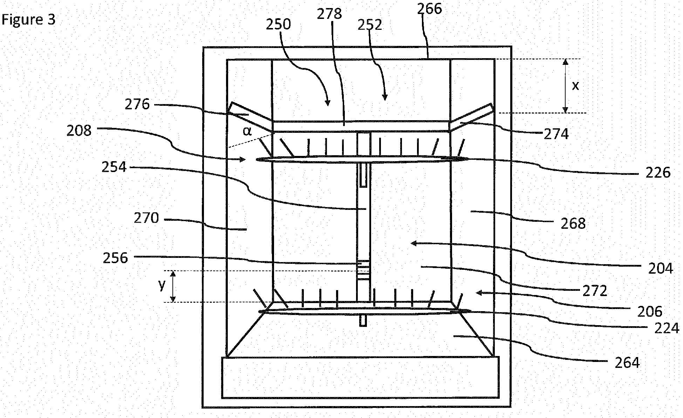

As shown in Figure 3, the interior of the dishwashing machine, or the washing compartment 204, comprises a base surface 264 and a top surface or roof 266 opposite the base surface 264. At least one side 268, 270 and 272 connects the base surface 264 to the top surface 266. The side surfaces 268 and 270 are opposite each other, and comprise lateral side surfaces of the washing compartment 204. The surface 272 may be considered a back surface of the washing machine. Although the door 240 is not shown in Figure 3 for clarity, when the door 240 is closed then the back surface 272 will be opposite the door 240. To this end it may be considered that the back surface 272 is opposite a door aperture of the dishwashing machine.

As shown in Figure 3 the upper channel 252 comprises a channel 274 attached to side surface 268, a channel 276 attached to side surface 270, and a channel 278 attached to back surface 272. The upper channels 252 are located in upper portion 208 of the dishwashing machine. For example a highest point of the channel 274 may be positioned a distance x below the top surface 266. For example, x may be less than 20cm, or less than 10cm. The same applies to channel 276. The channels 274 and 276 are angled at an angle α relative to a plane which is parallel to a plane of base surface 264 and/or top surface 266. α may be 45 degrees or less, or 30 degrees or less, or 20 degrees or less. The angled channels cause water in the channels to run towards, or accelerate towards, channel 278, and consequently towards turbine 256. In some embodiments the channel 278 may also comprise one or more angled portions. For example, the channel 278 may form a V-shaped when viewed from Figure 3, the lowest part of the "V" meeting the channel 254. In some examples the cross-section of the upper channels 252 may be substantially V or U-shaped (or half V or U-shaped, with the dishwasher surfaces 268, 270 and 272 comprising an outer edge of the respective channels).

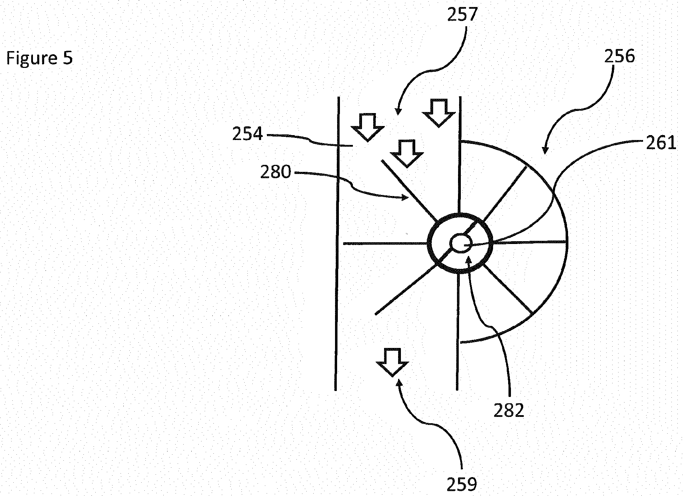

The channel or downpipe 254 may be vertically or substantially vertically mounted in the dishwashing machine. The channel 254 may form a substantially enclosed pathway (except for inlet and outlet) for water to run from the channel 278 down towards the turbine 256. At the top of the channel 254 the water has potential energy. As the water falls down pipe 254 this potential energy is converted to kinetic energy. This kinetic energy is captured by means of the electricity generator 255, which converts the kinetic energy of the falling water in to electrical energy (as explained in more detail with respect to Figure 5). As shown in Figures 2 and 3 the turbine 256 is positioned in lower portion 206 of the dishwashing machine. More specifically, as shown in Figure 3, a central axis of the turbine 256 may be a distance y above base surface 264. For example, y may be less than 20cm, or less than 10cm. By placing the turbine 256 in the lower portion 206, proximate to base surface 264, and placing the inlet to channel 254 in the upper portion 208, this provides a relatively large distance that the water falls before reaching the turbine, and thus a relatively large distance in which the potential energy of the water can be converted to kinetic energy and then electricity in the generator 255. In some examples the turbine is mounted on or attached to back surface 272.

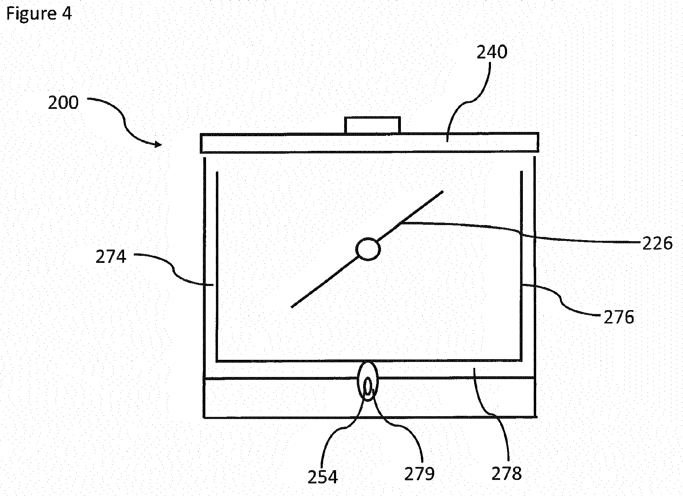

Figure 4 is an aerial view looking at the top of the dishwashing machine 200, in cross-section. In this Figure it is shown how the channels 274, 276 and 279, join at an inlet 279 of channel 254.

Figure 5 shows some components of the electricity generator 255 in more detail, in particular turbine 256. The turbine 256 in this example comprises one or more blades 280. In this example the turbine 256 has eight blades, although of course more or fewer may be provided. The blades may be equally spaced. In this example the turbine 256 comprises a shaft 261 which is fixed for rotation with the turbine, so shaft 261 rotates as the turbine rotates. In this example the turbine comprises one or more magnets 282. In this example the one or more magnets are disposed on or about the shaft 261. Therefore as the turbine rotates, so do the magnets 282. Falling water is shown schematically at 257. As this water impacts on blades 280, the turbine is caused to rotate. The rotating magnets 282 interact with one or more other magnets and/or conductors in the electricity generator 255 to create an electric current via induction. This is by way of example only and the electric generator could take various forms. For example the electric generator 255 may comprise a dynamo. Whichever form the electric generator takes, it will be understood that rotation of the turbine is converted in to electricity in the electric generator.

That is, water which has been sprayed by the spray arm(s) and which has collected on the sides or top surface of the washing compartment is directed on to the turbine so as to generate electricity in the electricity generator.

Having passed through the turbine 256, the water exits the turbine as shown at 259. From there, the water can pass back to the reservoir 258 for recirculation within the dishwashing machine 200.

In some examples the electricity generated by the electric generator is used to keep the dishwashing machine in a "standby" mode, as required (e.g. between washing cycles). In the standby mode some low power operations may be in operation, such as powering a standby light, displaying the time or some other basic information on display 138 etc. The power required for such operations may be provided by battery 260, which stores power generated by the generator 255. If the battery voltage is determined to have fallen below a threshold voltage then the controller may cause the dishwashing machine to switch to mains power supply to power the standby mode. Alternatively the dishwashing machine may still draw power from the battery, but supplement it with mains power.

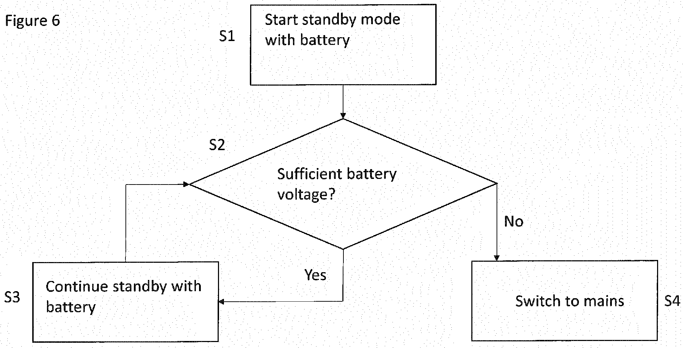

This is described with respect to Figure 6. At S1, the dishwashing machine is in standby mode, which standby mode is being powered by battery 260. At S2, a determination is made as to whether the battery has sufficient voltage e.g. whether it has fallen below a threshold level. This monitoring of battery voltage may be performed continuously or periodically. In some examples the battery is configured to provide a signal to the controller 234 when its voltage falls below the threshold level. If there is sufficient battery voltage then the method proceeds to S3, where the standby mode continues to be powered by the battery. If on the other hand there is not sufficient battery voltage then the method proceeds to step S4, where the dishwashing machine switches to mains power supply as described above.

In some examples the power generated by the electric generator 255 could be used for other power requirements of the dishwashing machine. In addition to, or alternatively to storing power in battery 260, the electric generator 255 could power components during a washing cycle. The power supplied by the generator 255 could supplement power provided from the mains, or could reduce the amount of power drawn from the mains, so as to reduce mains power consumption by the dishwashing machine 200.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data, for example memory. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A dishwashing machine comprising:
a washing compartment for holding one or more items to be washed;
a door arranged to be movable between a closed position and an open position to enable access to the washing compartment;
a washing mechanism for washing the one or more items to be washed, the washing mechanism comprising at least one spray arm for spraying water within the washing compartment;
a controller for controlling the dishwashing machine, and
an electrical generator comprising a turbine, the turbine configured to be rotated by water incident thereon so as to generate electricity in the generator.

2. A dishwashing machine according to claim 1, the dishwashing machine comprising one or more channels arranged to direct water on to the turbine.

3. A dishwashing machine according to claim 1 or claim 2, wherein at least one of the one or more channels is angled so as to direct water towards the turbine.

4. A dishwashing machine according to claim 2 or claim 3, at least one of the one or more channels comprised in an upper portion of the washing compartment.

5. A dishwashing machine according to any of claims 1 to 4, wherein at least one of the one or more channels comprises a vertical channel arranged above the turbine.

6. A dishwashing machine according to any of claims 1 to 5, wherein the turbine is located proximate to a base surface of the washing compartment.

7. A dishwashing machine according to any one of claims 1 to 6, wherein the washing compartment comprises a back surface positioned opposite a door aperture of the dishwashing machine, the turbine located on or adjacent the back surface.

8. A dishwashing machine according to any of claims 1 to 7, wherein the dishwashing machine is arranged to direct water which has exited the turbine for recirculation within the dishwashing machine.

9. A dishwashing machine according to any of claims 1 to 8, wherein the dishwashing machine is arranged to use electricity generated by the electrical generator to power one or more components of the dishwashing machine.

10. A dishwashing machine according to claim 9, wherein the one or more components comprise one or more low voltage components.

11. A dishwashing machine according to any of claims 1 to 10, wherein the dishwashing machine comprises a battery, the battery arranged to store at least some of the electricity generated by the generator.

12. A dishwashing machine according to claim 11, wherein the battery is arranged to supply electricity for maintaining the dishwashing machine in a standby mode.

13. A dishwashing machine according to claim 11 or claim 12, wherein the controller is arranged to monitor voltage of the battery, and if the battery voltage falls below a threshold level, to switch to mains power supply or to supplement the battery with mains power supply.
